# EUROPÄISCHE PATENTSCHRIFT

(11) **EP 3 044 053 B1**
(45) Veröffentlichungstag und Bekanntmachung des Hinweises auf die Patenterteilung: **13.11.2019**
(21) Anmeldenummer: 14741805.7
(22) Anmeldetag: 17.07.2014
(51) Int. Cl.: B60T 8/17, B60T 8/1755, B60T 8/24

(54) **VERFAHREN ZUR STABILISIERUNG DES FAHRVERHALTENS EINES FAHRZEUGGESPANNS UND FAHRDYNAMIKREGELEINRICHTUNG**
METHOD FOR STABILISING THE DRIVING BEHAVIOUR OF A TRACTOR-TRAILER COMBINATION AND VEHICLE MOVEMENT DYNAMICS CONTROL DEVICE
PROCÉDÉ DE STABILISATION DU COMPORTEMENT AU ROULAGE D'UN ATTELAGE ET DISPOSITIF DE RÉGLAGE D'UNE DYNAMIQUE DE ROULAGE

(30) Priorität: 10.09.2013 DE 102013014819
(43) Veröffentlichungstag der Anmeldung: 20.07.2016
(73) Patentinhaber: WABCO GmbH, 30453 Hannover (DE)
(72) Erfinder: MICHAELSEN, Arne, 30926 Seelze (DE); MUNKO, Tobias, 30459 Hannover (DE)
(74) Vertreter: Lauerwald, Jörg
(86) Internationale Anmeldenummer: PCT/EP2014/001945
(87) Internationale Veröffentlichungsnummer: WO 2015/036069

(56) Entgegenhaltungen:
- EP-A2- 0 918 003
- DE-A1- 10 359 216
- DE-A1- 19 751 867
- DE-A1-102004 035 579

## Beschreibung

Die Erfindung betrifft ein Verfahren zur Stabilisierung des Fahrverhaltens eines Fahrzeuggespanns mit einem Zugfahrzeug und wenigstens einem Anhängefahrzeug gem. dem Oberbegriff des Anspruchs 1. Die Erfindung betrifft außerdem eine Fahrdynamikregeleinrichtung zur Durchführung des Verfahrens mit einer auf den Antrieb und/oder die Bremsen des Fahrzeuggespanns wirkenden Regeleinheit gem. dem Oberbegriff des Anspruchs 5.

Fahrdynamikregelungen sind elektronisch gesteuerte Fahrassistenzsysteme für Kraftfahrzeuge, wobei durch Regeleingriffe auf den Antrieb und /oder die Bremsen das Fahrverhalten des Fahrzeugs stabilisiert wird. Beispielsweise kann durch gezieltes Abbremsen einzelner Räder dem Ausbrechen eines Fahrzeugs entgegengewirkt werden. Fahrdynamikregelungen können beispielsweise als Antiblockiersysteme oder Antriebsschlupfregelungen konfiguriert sein und werden oft, insbesondere bei Nutzfahrzeugen, mit einem elektronischen Bremssystem kombiniert.

Fahrdynamikregelungen, welche ein Überschlagen des Fahrzeuges unter Berücksichtigung einer Kippgrenze verhindern sollen, werden als "Roll Stability Control" (RSC) bezeichnet. Die RSC-Funktion wird oft als Zusatzfunktion einer Fahrdynamikregelung verwirklicht.

Roll Stability-Systeme können ein Kippen von Nutzfahrzeugen durch gezielte Regeleingriffe effektiv verhindern, wenn die Kippgrenze zuverlässig ermittelt werden kann. Unter Kippgrenze wird dabei die maximale Querbeschleunigung verstanden, ab der ein Kippen des Fahrzeugs möglich ist. Die Kippgrenze wird dabei neben fahrzeugspezifischen Parametern insbesondere von der Schwerpunkthöhe bestimmt.

Insbesondere bei Nutzfahrzeugen mit hohem Schwerpunkt ist bei ungünstiger Beladung eine niedrige Kippgrenze gegeben.

EP1 592 592 B1 offenbart eine derartige RSC-Fahrdynamikregelung. Zur Erhöhung der Fahrstabilität eines Nutzfahrzeugs wird durch Regeleingriffe in ein den Antrieb und /oder die Bremsen des Fahrzeugs betätigendes Regelsystem einer Fahrzeuginstabilität entgegengewirkt, wobei der Regeleingriff bei dem bekannten Verfahren in Abhängigkeit eines Verhältnisses zwischen der Schwerpunkthöhe des Schwerpunkts des Fahrzeugs und einer Federkonstante der Fahrzeugfederung erfolgen soll.

Bei Fahrzeuggespannen, das heißt Zusammenschlüssen eines Zugfahrzeuges mit mindestens einem Anhängerfahrzeug, werden mit den herkömmlichen RSC-Regelsystemen tatsächlich unterschiedliche Masseverteilungen zwischen dem Zugfahrzeug und den Anhängern nicht berücksichtigt. Die Kippgrenzen können bei unterschiedlichen Fahrzeugen verschieden und können durch unterschiedliche Zuladungen einzelner Fahrzeuge deutlich voneinander abweichen. Ist eines der zusammen geschlossenen Fahrzeuge kippkritisch stark beladen, während ein anderes Fahrzeug leer fährt und damit eine geringe Kippgefahr besteht, kann es zu einem Umkippen bei Kurvenfahrten kommen. Um dies zu vermeiden ist die Fahrdynamikregelung mit einem entsprechenden Kompromiss zwischen Kippschutz und Fahrbarkeit auszulegen. Bei Fahrten mit gleichmäßiger Ladungsverteilung in den Fahrzeugen des Fahrzeuggespanns kommt es dann jedoch häufig zu Regeleingriffen, welche für die Fahrstabilität nicht erforderlich sind und vom Fahrer des Fahrzeugs als unangenehm empfunden werden.

EP 0 737 608 B1 betrifft ein Verfahren zur Bestimmung des Verhältnisses der Masse eines Fahrzeugzuges und der Masse des Zugfahrzeugs, wobei an dem Zugfahrzeug eine Bremskraftverteilung zwischen den Fahrzeugachsen bestimmt wird. Weist das Fahrzeug eine Luftfederung auf, so kann aus dem erforderlichen Balgdruck auf die Achslast und damit wiederum auf die Zuladung geschlossen werden, wodurch die Gesamtmasse des Fahrzeugs ermittelt werden soll. Die Massen der anderen Fahrzeuge des Fahrzeugzugs ergeben sich durch Multiplikation der Masse des einen Fahrzeugs mit den ermittelten Verhältnissen zwischen den Massen.

Weitere im Stand der Technik bekannte beladungsabhängige Kippverhinderungssysteme sind aus den Dokumenten DE 197 51 867 A1 und EP 0 918 003 A2 bekannt.

Der vorliegenden Erfindung liegt das Problem zugrunde, ein Verfahren zur Stabilisierung des Fahrverhaltens eines Fahrzeuggespanns und eines Fahrdynamikregeleinrichtung zur Durchführung des Verfahrens zu schaffen, welche die Stabilisierung des Fahrverhaltens von Fahrzeuggespannen bei unterschiedlichen Belastungen bzw. Zuladungen der einzelnen Fahrzeuge eines Fahrzeuggespanns verbessern.

Das Problem wird erfindungsgemäß durch ein Verfahren mit den Merkmalen des Anspruchs 1 gelöst. Das Problem wird außerdem durch eine Fahrdynamikregeleinrichtung mit den Merkmalen des Anspruchs 5 gelöst.

Gemäß der Erfindung werden in einem Fahrzeuggespann mit mehreren Fahrzeugen für mehrere Fahrzeuge oder jedes Fahrzeug jeweilige Kippneigungsgrößen bestimmt und aus den dadurch zur Verfügung stehenden Kippneigungsgrößen der für die Bestimmung einer Kippgrenze maßgebliche Wert der Kippneigungsgröße ausgewählt. Die Kippneigungsgröße ist eine physikalische Größe, welche Einfluss auf die Neigung des Fahrzeugs zum Kippen unter der Wirkung von Querbeschleunigung hat. Wird die Kippneigung mehrerer oder jedes Fahrzeugs des Fahrzeuggespanns individuell bestimmt, so kann die Fahrdynamikregelung den individuellen Belastungszustand einzelner Fahrzeuge berücksichtigen und somit auch bei extrem unterschiedlichen Belastungszuständen zum einen ein Kippen sicher vermeiden. Außerdem werden tatsächlich überflüssige Regeleingriffe vermieden, welche bei herkömmlichen RSC-Regelungen mit einer einheitlichen Kippgrenze für das gesamte Fahrzeuggespann zugunsten der Kippsicherheit oft auch in unkritischen Situationen in Kauf genommen werden müssen.

Der für die Bestimmung der Kippgrenze maßgebliche Wert der Kippneigungsgröße wird erfindungsgemäß aus den jeweiligen Kippneigungsgrößen einzelner Fahrzeuge bestimmt, wobei zusätzliche Informationen über den Fahrzustand des Fahrzeuggespanns oder einzelner Fahrzeuge des Gespanns zur getrennten Betrachtung einzelner Fahrzeuge herangezogen werden können. Derartige Information ist oft ohnehin in elektronischen Systemen einzelner Fahrzeugen vorhanden und können zur getrennten Bestimmung einzelner Kippneigungsgrößen und gegebenenfalls einzelner Kippgrenzen mit geringem Aufwand herangezogen werden. Es können daher im jeweiligen Fahrzeug vorhandene Signale zusätzlich verwendet werden, um RSC-Regeleingriffe der aktuellen Beladung von Fahrzeugen von Fahrzeuggespannen und der entsprechenden Masseverteilung optimal anzupassen.

Die erfindungsgemäße Fahrdynamikregeleinrichtung umfasst mehrere, einzelnen Fahrzeugen des Fahrzeuggespanns zugeordnete, Mittel zur Bestimmung jeweiliger Kippneigungsgrößen des betreffenden Fahrzeuges. Diese Mittel können in einer elektronischen Zentraleinheit angeordnet sein, in der die RSC-Regelfunktion integriert ist, wobei eine signalübertragende Verbindung zu Mitteln in den einzelnen Fahrzeugen besteht.

In einer vorteilhaften Ausführungsform der Erfindung wird als maßgeblicher Wert der Kippneigungsgröße für die Bestimmung der Kippgrenze der Fahrdynamikregelung die individuelle Kippneigungsgröße des am meisten zum Kippen neigenden Fahrzeugs des Fahrzeuggespanns ausgewählt. Auf diese Weise ist ein optimaler Kompromiss zwischen Kippschutz für das Fahrzeuggespann und Fahrbarkeit des Fahrzeuggespanns mit möglichst wenigen Regeleingriffen durch die Fahrdynamikregeleinrichtung gegeben. Die Kippgrenze ist dabei die Eingriffsschwelle für die Querbeschleunigung, bei dessen Erreichen oder Überschreiten die Fahrdynamikregelung einen Regeleingriff vornimmt und den Antrieb bzw. das Motormanagement und/oder die Bremsen einzelner oder aller Fahrzeuge des Gespanns ansteuert.

Die Kippneigungsgröße kann vorgegeben sein oder wird gemessen bzw. aus Messwerten hergeleitet. In einer Ausführungsform wird zur Generierung einer Kippneigungsgröße das Abheben einzelner Räder oder eine Tendenz zu einem Abheben detektiert. Hierzu wird der Schlupf einzelner Räder durch entsprechende Sensoren bei Kurvenfahrten oder Testbremsungen erfasst.

Erfindungsgemäß wird als Kippneigungsgröße der Fahrzeugschwerpunkt des jeweiligen Fahrzeugs ermittelt. Der Fahrzeugschwerpunkt und insbesondere dessen Höhe bestimmt maßgeblich die Kippneigung des jeweiligen Fahrzeugs unter Querbeschleunigung. Zudem ändert sich der Fahrzeugschwerpunkt mit der Masse des Fahrzeugs, so dass durch die Heranziehung des Fahrzeugschwerpunkts als Kippneigungsgröße die tatsächliche Beladung einzelner Fahrzeuge des Fahrzeuggespanns berücksichtigt werden. Für die Bestimmung der Kippgrenze der Fahrdynamikregelung wird vorteilhaft der am höchsten liegenden Fahrzeugschwerpunkt aller zusammen geschlossenen Fahrzeuge herangezogen. Anders ausgedrückt könnte jedem Fahrzeugschwerpunkt eine jeweilige Kippgrenze zugeordnet werden, wobei die niedrigste Kippgrenze der einzelnen Fahrzeuge die letztlich der Fahrdynamikregelung vorgegebene Kippgrenze bestimmt.

Erfindungsgemäß wird der jeweilige Fahrzeugschwerpunkt der Fahrzeuge des Gespanns anhand einer am betreffenden Fahrzeug erfassten Masseinformation des Fahrzeugs unter Berücksichtigung vorgegebener Fahrzeuginformationen ermittelt. Die Masseinformation kann dabei jede Information oder gemessene physikalische Größe sein, welche die Masse des Fahrzeugs charakterisiert. Durch die Heranziehung der Masseinformation wird der Umstand ausgenutzt, dass der Fahrzeugschwerpunkt wesentlich von dem Gewicht und ferner von konstruktiv gegebenen Parametern bestimmt wird. Es wird daher für den jeweiligen Fahrzeugstyp individuelle Fahrzeuginformation vorgegeben, wodurch der Fahrzeugschwerpunkt mit einer hohen Genauigkeit unter Berücksichtigung der erfassten Masse geschätzt werden kann.

Vorzugsweise wird die Masseinformation aus einem Federungssystem des betreffenden Fahrzeugs hergeleitet, beispielsweise aus einer Information über die Achslast.

In besonders bevorzugter Ausführungsform der Erfindung wird die Masseinformation von einem elektronisch geregeltem Luftfiltersystem des betreffenden Fahrzeugs bereitgestellt. Derartige Luftfedersysteme sind unter der Abkürzung "ECAS" ("electronically controlled air suspension") bekannt. Das Luftfedersystem ECAS umfasst unter Anderem Wegsensoren, Magnetventile und Luftbälge an den einzelnen Rädern sowie eine zentrale ECAS-Steuereinheit. Im ECAS-System werden unter anderem auch Informationen über die jeweilige Achslast ermittelt und berücksichtigt, sodass mit diesen ohnehin vorhandenen Fahrzeugdaten die erfindungsgemäße Masseinformation für die Bestimmung des individuellen Fahrzeugschwerpunkts genutzt werden kann.

Erfindungsgemäß sind daher die Mittel zur Bestimmung individueller Fahrzeugschwerpunkte mit dem elektronisch geregelten Luftfedersystem des betreffenden Fahrzeugs signalübertragend verbunden. Vorzugsweise ist die Fahrdynamikregeleinrichtung mit den elektronisch geregelten Luftfedersystemen einzelner Fahrzeuge über ein serielles Bussystem verbunden, welches auch als CAN = "controller area network" bezeichnet wird.

Die Masseinformation zu einem Anhängerfahrzeug wird gemäß der Erfindung unter Berücksichtung der Masseinformation eines oder mehrerer anderer Fahrzeuge hergeleitet. Auf diese Weise erfolgt eine Stabilisierung des Fahrverhaltens unter Berücksichtigung individueller Kippneigungen der Fahrzeuge des Fahrzeuggespanns, ohne dass an jedem Fahrzeug Kippneigungsgrößen erfasst werden. Zur Ermittlung der Masseinformation des betreffenden Anhängerfahrzeugs wird eine Masseinformation eines anderen Fahrzeugs des Fahrzeuggespanns, welches insbesondere aus dem Luftfedersystem des anderen Fahrzeugs hergeleitet wird, von einer Masseinformation zum Fahrzeuggespann subtrahiert. Die Masseinformation zum Fahrzeuggespann wird dabei unter Berücksichtigung aktueller Betriebsgrößen des Zugfahrzeugs geschätzt. Als solche Betriebsgrößen zur Schätzung der Masseinformation werden bevorzugt Informationen aus dem Motor-management herangezogen, etwa die Drehmomente des Motors. Die Betriebgrößen erlauben einen Rückschluss auf die Masse des gesamten Fahrzeuggespanns, welches von dem Motor bewegt wird.

Ausführungsbeispiele der Erfindung sind nachstehend anhand der Zeichnung näher erläutert. Es zeigen:
- Fig. 1: einen pneumatischen und elektrischen Leitungsplan einer Fahrdynamikregeleinrichtung,
- Fig. 2: ein schematisiertes Flussschaubild eines Ausführungsbeispiels des erfindungsgemäßen Verfahrens zur Stabilisierung des Fahrverhaltens unter Berücksichtigung von Kippgrenzen,
- Fig. 3: ein schematisiertes Flussschaubild eines weiteren Ausführungsbeispiels des erfindungsgemäßen Verfahrens zur Stabilisierung des Fahrverhaltens unter Berücksichtigung von Kippgrenzen,
- Fig. 4: eine graphische Darstellung einer Kennlinie.

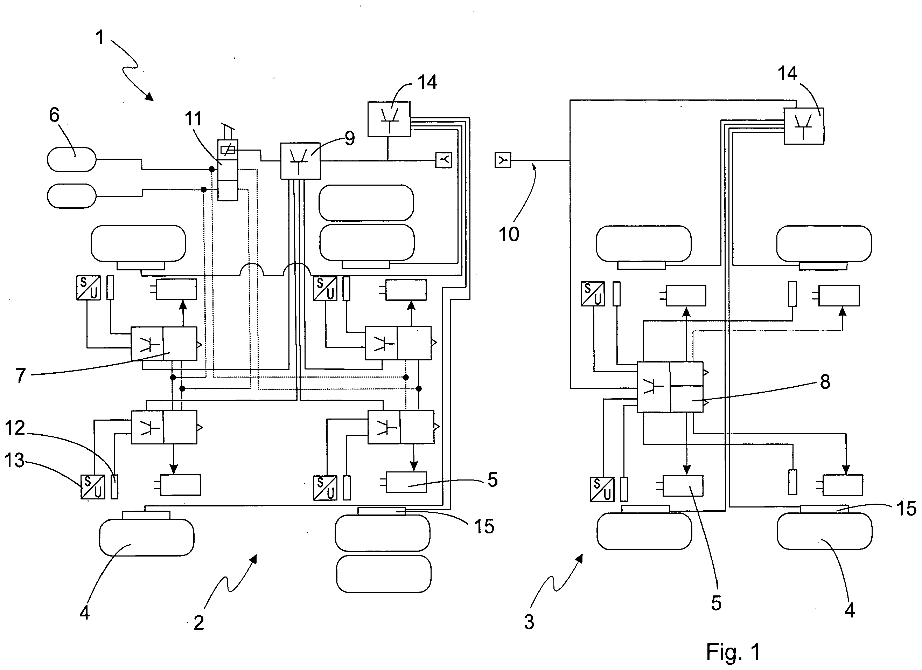

Fig. 1 zeigt einen pneumatischen und elektrischen Leitungsplan eines Ausführungsbeispiels einer Fahrdynamikregeleinrichtung für ein Fahrzeuggespann 1, welches im vorliegenden Ausführungsbeispiel aus einem Zugfahrzeug 2 und einem Anhängerfahrzeug 3 besteht. Die pneumatischen Leitungen sind zur Verbesserung der Übersichtlichkeit punktiert dargestellt.

Die Fahrdynamikregelung umfasst Mittel zur Stabilisierung des Fahrverhaltens im Hinblick auf die Absicherung gegen ein Umkippen (RSC-Funktion). Die RSC-Funktion ist unten näher erläutert. Im gezeigten Ausführungsbeispiel ist die RSC-Funktion in eine Fahrdynamikregelung integriert, welche weitere Fahrdynamikfunktionen aufweist. Die erfindungsgemäße RSC-Funktion kann in beliebiger Kombination mit weiteren Fahrdynamiksystemen verwirklicht werden, insbesondere mit einer gemeinsamen zentralen Regeleinheit.

Sämtlichen Rädern 4 des Zugfahrzeugs 2 und des Anhängerfahrzeugs 3 sind jeweils pneumatische Bremszylinder 5 zugeordnet. Die Bremszylinder 5 werden aus Druckbehältern 6 pneumatisch versorgt. Die Bremszylinder 5 werden von Druckregelmodulen 7, 8 betätigt, welche jeweils mit einer elektronischen Regeleinheit 9 signalübertragend über ein serielles Bussystem 10 (CAN) verbunden sind. Das Bussystem 10 vernetzt verschiede Steuer- bzw. Regelgeräte in den einzelnen Fahrzeugen und im gesamten Fahrzeuggespann 1.

An die Steuereinheit 9 ist ein Signalgeber 11 angeschlossen. Betätigt ein Fahrer des Zugfahrzeugs 2 das Fahrpedal des Signalgebers 11, so teilt der Signalgeber 11 der Steuereinheit 9 einen Bremswunsch mit. Die Regeleinheit 9 berechnet abhängig von den Abbremswunsch und den zur Verfügung stehenden Betriebsparametern einen optimalen Bremsdruck, welcher den Druckregelmodulen 7, 8 über das Bussystem 10 vorgegeben wird. Zur laufenden Ermittlung von Betriebsparametern sind den Rädern 3 jeweils Drehzahlmesser 12 und Drucksensoren 13 zugeordnet.

Sowohl das Zugfahrzeug 2 als das Anhängerfahrzeug 3 weisen ein elektronisch geregeltes Luftfedersystem (ECAS = "electronically controlled air suspension"). Das ECAS-System jedes Fahrzeugs umfasst ein elektronisches ECAS-Steuergerät 14, 15, welche über nicht dargestellte Magnetventile jeweils den Rädern 4 zugeordnete Luftbälge 16 ansteuert. Das ECAS-System umfasst ferner nicht dargestellte Wegsensoren, welche signalübertragend mit den jeweiligen Steuergeräten 14, 15 verbunden sind. Das elektronische ECAS-Steuergerät 14 im Zugfahrzeug 2 und das elektronische ECAS-Steuergerät 14 im Anhängerfahrzeug 3 sowie die ECAS-Steuergeräte in weiteren Anhängerfahrzeugen sind über das Bussystem 10 mit der Regeleinheit 9 der Fahrdynamikregeleinrichtung 9 verbunden.

Anhand der gemessenen Daten berechnet die elektronische Regeleinheit 9 Sollwerte der Fahrzeugbewegung. Dabei wird ständig das reale Fahrzeugverhalten mit den errechneten Sollwerten verglichen. Weicht das Fahrgespann 1 von einem Sollverhalten ab, erfolgt ein Regeleingriff an den Bremsen eines oder mehrerer Räder und /oder in das Motormanagement, wobei auf den Antrieb eingewirkt wird und beispielsweise das Drehmoment geändert wird. Zusätzlich zu den Raddrehzahlen über die Drehzahlmesser 12 und den Bremsdruck über die Drucksensoren 13 können weitere Fahrparameter für die Fahrdynamikfunktionen gemessen werden wie beispielsweise die Gierwinkelgeschwindigkeit oder der Lenkradwinkel. In der Fahrdynamikregeleinrichtung 23 sind entsprechende Regelalgorithmen abgelegt, welche beispielsweise ein Antiblockiersystem oder eine Antriebsschlupfregelung realisieren.

Dabei wird über die Ermittlung eines Schwerpunkts eine Kippgrenze ermittelt und durch gezielte Regeleingriffe in das Motor-Management bzw. den Antrieb des Zugfahrzeugs 2 oder gezielte Ansteuerung der Bremszylinder 5 die Kippneigung unterbunden. Anhand der gemessenen Fahrzeugparameter wird die aktuelle Querbeschleunigung erfasst und ein Regeleingriff vorgenommen. Bei Erreichen oder Überschreiten der Kippgrenze, das heißt der Eingriffsschwelle für die Querbeschleunigung, wird durch Regeleingriff die Kippneigung unterbunden. Die aktuelle Querbeschleunigung kann dabei aus den vorhandenen Messwerten, insbesondere aus den über Drehzahlmesser 12 erfassten einzelnen Raddrehzahlen, oder über eigens angeordnete Querbeschleunigungssensoren erfasst werden.

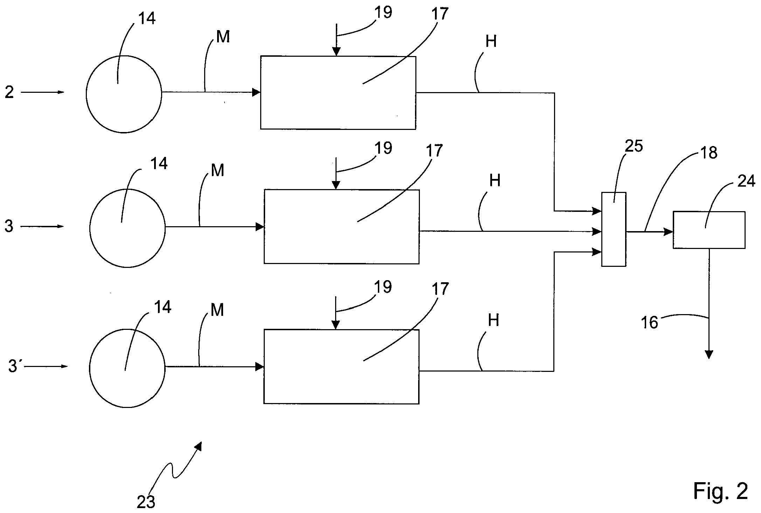

Fig. 2 zeigt ein Flussschaubild zur Bestimmung der Kippgrenze 16 im Rahmen eines Verfahrens zur Stabilisierung des Fahrverhaltens des Fahrzeuggespanns. Dabei wird am mehreren Fahrzeugen des Fahrzeuggespanns als Kippneigungsgröße, welche Einfluss auf die Kippneigung des Fahrzeugs unter der Wirkung von Querbeschleunigung hat, der jeweilige Fahrzeugschwerpunkt H bestimmt. Aus den individuellen Fahrzeugschwerpunkten H wird der für die Bestimmung der Kippgrenze 16 maßgebliche Wert 18 des Schwerpunkts ermittelt. Im gezeigten Ausführungsbeispiel umfasst das Fahrzeuggespann ein Zugfahrzeug 2 und zwei Anhängerfahrzeuge 3, 3', welche jeweils über ein ECAS-System und jeweils ein ECAS-Steuergerät 14 verfügen. Weitere Anhängerfahrzeuge, welche mit ECAS ausgestattet sind, können ohne weiteres bei der Ermittlung der Eingriffsschwelle für die Fahrdynamikregeleinrichtung 23 berücksichtigt werden.

Die Fahrdynamikregeleinrichtung 23 umfasst mehrere, den einzelnen Fahrzeugen des Fahrzeuggespanns zugeordnete, Bestimmungsmittel 17 zur Bestimmung jeweiliger Fahrzeugschwerpunkte H. Die Bestimmungsmittel 17 können dabei in die zentrale Regeleinheit 9 (Fig. 1) baulich integriert sein mit entsprechender Implementierung des beschriebenen Verfahrens. Jedem Bestimmungsmittel 17 zur Bestimmung der jeweiligen Fahrzeugschwerpunkte H wird als Eingangsgröße eine Masseinformation M von den ECAS-Steuergeräten 14 der einzelnen Fahrzeuge vorgegeben. Die Masseinformation M wird dabei im Rahmen der ECAS-Funktion ermittelt und steht somit fahrzeugindividuell zur Verfügung. Als weitere Eingangsgröße wird den Bestimmungsmitteln 17 zur Bestimmung der jeweiligen Fahrzeugschwerpunkte H im Voraus ermittelte Fahrzeuginformation 19 vorgegeben, welche den Typ des jeweiligen Fahrzeugs charakterisiert und im Betrieb unveränderlich ist. Die spezifische Fahrzeuginformation 19 ist im vorliegenden Fall das Bruttogewicht des Fahrzeugs. Die spezifische Fahrzeuginformation 19 kann dabei aber auch weitere Information, beispielsweise über die Spurweite des Fahrzeugs, enthalten. In der Regeleinheit 9 können verschiedene Datensätze für unterschiedliche Fahrzeugtypen abgelegt sein, welche bei einer Ankopplung bzw. Verwendung des entsprechenden Fahrzeugs aktiviert werden.

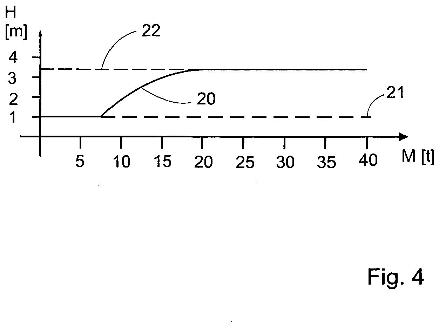

Aus der Masseinformation M des ECAS-Steuergeräts 14 des jeweiligen Fahrzeugs und der spezifischen Fahrzeuginformation 19 kann der jeweilige Fahrzeugschwerpunkt H genau abgeschätzt werden. Hierfür sind in der Regeleinheit 9 entsprechende Kennlinien abgelegt. Ein Beispiel einer Kennlinie zur Schätzung des Fahrzeugschwerpunkts H ist in Fig. 4 gezeigt. Die Kennlinie 20 ist dabei der graphische Verlauf der Höhe des Fahrzeugschwerpunkts H in Metern über der Masse m des betreffenden Fahrzeugs in Tonnen. Der untere Zustand 21 entspricht dem unbeladenen Bruttogewicht des Fahrzeugs. Der obere Zustand 22 entspricht einer vollen Beladung des Fahrzeugs.

Die Fahrdynamikregeleinrichtung 23 umfasst ferner Bestimmungsmittel 24 zur Bestimmung der Kippgrenze 16 aus den Fahrzeugschwerpunkten H der einzelnen Fahrzeuge des Fahrzeuggespanns. Dabei werden die ermittelten Informationen über die jeweiligen Schwerpunkte H der einzelnen Fahrzeuge ausgewertet und eine Kippgrenze 16 bestimmt, welche für die Fahrdynamikregeleinrichtung die Eingriffsschwelle der Querbeschleunigung bilden soll. Die ermittelten Fahrzeugschwerpunkte H werden in einer vergleichenden Verknüpfung 25 in Beziehung zu einander gesetzt und der am höchsten liegende Fahrzeugschwerpunkt H als maßgeblicher Wert 18 des Schwerpunkts für die Bestimmung der Kippgrenze 16 herangezogen.

Anstelle der bisher üblichen Vorgehensweise bei bekannten RSC-Regelungen, bei denen eine einzige Kennlinie für eine Kippgrenze über der gesamten Masse des Fahrzeuggespanns berücksichtigt wird, werden individuelle Kennlinien 20 (Fig. 4) für jedes Fahrzeug des Fahrzeuggespanns ermittelt. Die fahrzeugindividuellen Kennlinien werden von den Bestimmungsmitteln 17 zur Bestimmung des jeweiligen Fahrzeugschwerpunkts H herangezogen.

Durch die Heranziehung des am höchsten liegenden Schwerpunkts H der einzelnen Fahrzeuge als maßgeblichen Wert 26 zur Bestimmung der Eingriffsschwelle (Kippgrenze 16) wird anders ausgedrückt die niedrigste Kippgrenze aller im Fahrzeuggespann kombinierten einzelnen Fahrzeuge für die Stabilisierung des Fahrverhaltens des Fahrzeuggespanns im Rahmen der RSC-Funktion herangezogen.

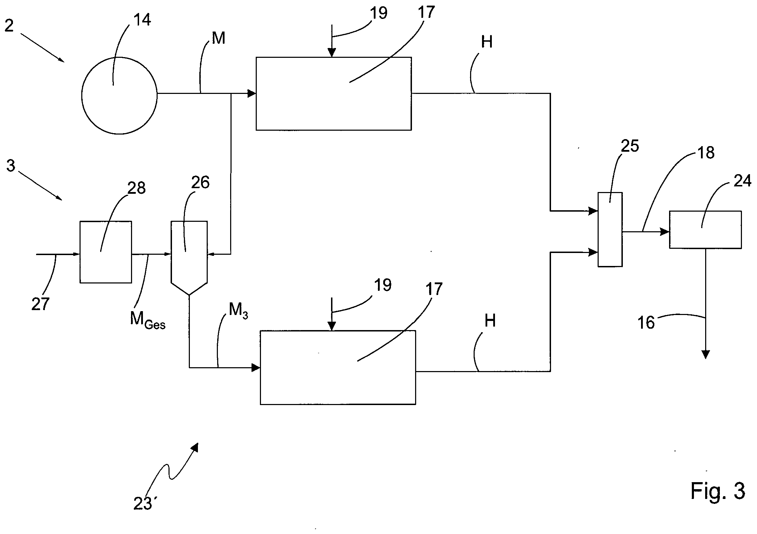

Fig. 3 zeigt ein Flussschaubild eines weiteren Ausführungsbeispiels eines Verfahrens zur Stabilisierung des Fahrverhaltens eines Fahrzeuggespanns, welches zwei Fahrzeuge umfasst, nämlich ein Zugfahrzeug 2 und ein Anhängerfahrzeug 3. Im Unterschied zum Ausführungsbeispiel gemäß Fig. 2 wird eine Masseinformation M₃ nicht aus Informationen von Einrichtungen des Anhängerfahrzeugs 3 ermittelt, sondern die Masseinformation M₃ des Anhängerfahrzeugs 3 durch Subtraktion der Masseinformation M des Zugfahrzeugs 2 der Masseinformation M_{Ges} zum Fahrzeuggespann ermittelt. Die Fahrdynamikregeleinrichtung 23'umfasst hierfür ein Subtraktionsglied 26, welches als Minuend die Masseinformation M_{Ges} zum Fahrzeuggespann und als Subtrahend die Masseinformation M des Zugfahrzeugs 2 empfängt. Ausgangsgröße des Subtraktionsglieds 26 ist der Wert der Differenz des Minuenden und des Subtrahenden, welche in der Fahrdynamikregeleinrichtung 23' als Masseinformation M₃ des Anhängerfahrzeugs 3 angenommen und wie im Ausführungsbeispiel zu Fig. 2 verarbeitet wird. Die Masseinformation M zum Zugfahrzeug 2 wird wie im Ausführungsbeispiel gemäß Fig. 2 vom ECAS-Steuergerät 14 des Zugfahrzeugs 2 zur Verfügung gestellt.

Die Masseinformation M_{Ges} zum Fahrzeuggespann wird unter Berücksichtigung aktueller Betriebsgrößen 27 des Zugfahrzeugs geschätzt. Im gezeigten Ausführungsbeispiel werden als Betriebsgröße des Zugfahrzeugs die Drehmomente des Antriebsmotors ausgewertet. Die Fahrdynamikregeleinrichtung 23' umfasst ein Schätzmittel 28, welches aus den erfassten Drehmomenten des Antriebsmotors oder anderen Motorinformationen Rückschlüsse auf die vom Antriebsmotor bewegte Masse zieht, welche als Masse des gesamten Fahrzeuggespanns angenommen wird.

Auf diese Weise ist eine Stabilisierung des Fahrverhaltens eines Fahrzeuggespanns unter Berücksichtigung der einzelnen Massen der kombinierten Fahrzeuge zur Verfügung gestellt, welche keine Messwerte vom Anhängerfahrzeug 3 benötigt.

### Bezugszeichenliste (Bestandteil der Beschreibung)

- 1.: Fahrzeuggespann
- 2.: Zugfahrzeug
- 3.: Anhängerfahrzeug
- 4.: Rad
- 5.: Bremszylinder
- 6.: Druckbehälter
- 7.: Druckregelmodul
- 8.: Druckregelmodul
- 9.: Regeleinheit
- 10.: Serielles Bussystem
- 11.: Signalgeber
- 12.: Drehzahlmesser
- 13.: Drucksensor
- 14.: ECAS-Steuergerät
- 15.: Luftbalg
- 16.: Kippgrenze
- 17.: Bestimmungsmittel (für H)
- 18.: Wert (Schwerpunkt)
- 19.: Fahrzeuginformation
- 20.: Kennlinie
- 21.: Unterer Zustand
- 22.: Oberer Zustand
- 23.: Fahrdynamikregeleinrichtung
- 24.: Bestimmungsmittel (für 16)
- 25.: Vergleichende Verknüpfung
- 26.: Subtraktionsglied
- 27.: Betriebsgröße
- 28.: Schätzmittel

- H: Fahrzeugschwerpunkt
- M: Masseinformation
- M3: Masseinformation
- MGes: Masseinformation

## Patentansprüche

1. Verfahren zur Stabilisierung des Fahrverhaltens eines Fahrzeuggespanns (1) mit mehreren Fahrzeugen, nämlich einem Zugfahrzeug (2) und wenigstens einem Anhängerfahrzeug (3), wobei eine Kippneigungsgröße ermittelt und anhand der Kippneigungsgröße eine Kippgrenze (16) bestimmt und einer auf den Antrieb und / oder die Bremsen des Fahrzeuggespanns (1) wirkenden Fahrdynamikregelung vorgegeben wird, wobei an mehreren Fahrzeugen des Fahrzeuggespanns (1) die jeweilige Kippneigungsgröße bestimmt wird und aus den Kippneigungsgrößen der für die Bestimmung der Kippgrenze (16) maßgebliche Wert (18) der Kippneigungsgröße ausgewählt wird, **dadurch gekennzeichnet, dass** als Kippneigungsgröße ein Fahrzeugschwerpunkt (H) des jeweiligen Fahrzeugs ermittelt wird, wobei für die Bestimmung der Kippgrenze (16) der Fahrdynamikregelung der am höchsten liegenden Fahrzeugschwerpunkt (H) der einzelnen Fahrzeuge herangezogen wird, wobei der jeweilige Fahrzeugschwerpunkt (H) anhand einer am betreffenden Fahrzeug erfassten Masseinformation (M) unter Berücksichtigung vorgegebener spezifischer Fahrzeuginformation (19) ermittelt wird, wobei die Masseinformation (M₃) zu einem einzelnen Fahrzeug (3) des Fahrzeuggespanns (1) durch Subtraktion einer Masseinformation (M) eines anderen Fahrzeugs des Fahrzeuggespanns (1) von einer Masseinformation (M_{Ges}) zum Fahrzeuggespann (1) ermittelt wird, welche unter Berücksichtigung aktueller Betriebsgrößen (L) des Zugfahrzeugs (2) geschätzt wird.

2. Verfahren nach Anspruch 1,
**dadurch gekennzeichnet, dass** als maßgeblicher Wert (18) der Kippneigungsgröße für die Bestimmung der Kippgrenze (16) die Kippneigungsgröße des am meisten zum Kippen neigenden Fahrzeugs des Fahrzeuggespanns (1) ausgewählt wird.

3. Verfahren nach Anspruch 1
**dadurch gekennzeichnet, dass** die Masseinformation (M) aus einem Federungssystem des betreffenden Fahrzeugs hergeleitet wird.

4. Verfahren nach Anspruch 1 oder 3,
**dadurch gekennzeichnet, dass** die Masseinformation (M) von einem Steuergerät (14) eines elektronisch geregelten Luftfedersystems des betreffenden Fahrzeugs bereitgestellt wird.

5. Fahrdynamikregeleinrichtung zur Durchführung des Verfahrens nach einem der vorhergehenden Ansprüche, mit einer auf den Antrieb und /oder die Bremsen des Fahrzeuggespanns (1) wirkenden Regeleinheit (9) und mit Mitteln zur Bestimmung einer Kippneigungsgröße und zur Bestimmung einer Kippgrenze (16) anhand der Kippneigungsgröße, wobei die Fahrdynamikregeleinrichtung (23) mehrere, einzelnen Fahrzeugen des Fahrzeuggespanns (1) zugeordnete Bestimmungsmittel (17) zur Bestimmung jeweiliger Kippneigungsgrößen des betreffenden Fahrzeugs, und zur Ermittlung des maßgeblichen Werts (26) der Kippneigungsgröße für die Bestimmung der Kippgrenze (16) aus den Fahrzeugschwerpunkten (H), sowie Bestimmungsmittel (24) zur Bestimmung der Kippgrenze (16) aus dem maßgeblichen Wert (26) der Kippneigungsgröße umfasst, **dadurch gekennzeichnet, dass** die Bestimmungsmittel (17) dergestalt ausgebildet sind, das jedem Bestimmungsmittel (17) zur Bestimmung der jeweiligen Fahrzeugschwerpunkte H als Eingangsgröße eine Masseinformation (M) und eine im Voraus ermittelte Fahrzeuginformation (19) vorgegeben wird, wobei die Bestimmungsmittel (24) dergestalt ausgebildet sind, das für die Bestimmung der Kippgrenze (16) der Fahrdynamikregelung der am höchsten liegende Fahrzeugschwerpunkt (H) der einzelnen Fahrzeuge herangezogen wird, wobei die Fahrdynamikregeleinrichtung (23) zur Ermittlung der Masseinformation (M₃) ein Subtraktionsglied (26) umfasst, welches als Minuend die Masseinformation M_{Ges} zum Fahrzeuggespann und als Subtrahend die Masseinformation M des Zugfahrzeugs (2) empfängt.

6. Fahrdynamikregeleinrichtung nach Anspruch 5,
**dadurch gekennzeichnet, dass** die Bestimmungsmittel (17) zur Bestimmung jeweiliger Kippneigungsgrößen zur Bestimmung eines Fahrzeugschwerpunkts (H) des jeweiligen Fahrzeugs ausgebildet sind.

7. Fahrdynamikregeleinrichtung nach Anspruch 6,
**dadurch gekennzeichnet, dass** die Bestimmungsmittel (17) zur Bestimmung jeweiliger Fahrzeugschwerpunkte (H) mit einem Steuergerät (14) eines elektronisch geregelten Luftfedersystems des betreffenden Fahrzeugs signalübertragend verbunden sind.

8. Fahrdynamikregeleinrichtung nach Anspruch 6 oder 7,
**dadurch gekennzeichnet, dass** die Fahrdynamikregeleinrichtung (23) mit den Steuergeräten (14) der elektronisch geregelten Luftfedersysteme einzelner Fahrzeuge über ein serielles Bussystem (10) verbunden ist.

## Claims

1. Method for stabilizing the driving behavior of a tractor-trailer combination (1) comprising a plurality of vehicles, specifically a tractor (2) and at least one trailer (3), wherein a tilting inclination variable is obtained and a tilting limit (16) is determined on the basis of the tilting inclination variable and is predefined to a vehicle movement dynamics control system acting on the drive and/or the brakes of the tractor-trailer combination (1), wherein the respective tilting inclination variable is determined at a plurality of vehicles of the tractor-trailer combination (1), and the value (18) of the tilting inclination variable which is decisive for the determination of the tilting limit (16) is selected from the tilting inclination variables, **characterized in that** a center of gravity (H) of the respective vehicle is determined as a tilting inclination variable, wherein the highest center of gravity (H) of the individual vehicles is used for the determination of the tilting limit (16) of the vehicle movement dynamics control system, wherein the respective center of gravity (H) of a vehicle is determined on the basis of mass information (M) detected at the respective vehicle, taking into account predefined specific vehicle information (19), wherein the mass information (M₃) relating to an individual vehicle (3) of the tractor-trailer combination (1) is determined by subtracting mass information (M) of another vehicle of the tractor-trailer combination (1) from mass information (M_{Ges}) relating to the tractor-trailer combination (1), which mass information (M_{Ges}) is estimated taking into account current operating variables (L) of the tractor (2).

2. Method according to Claim 1,
**characterized in that** the tilting inclination variable of that vehicle of the tractor-trailer combination (1) which inclines most to tilting is selected as the decisive value (18) of the tilting inclination variable for the determination of the tilting limit (16).

3. Method according to Claim 1,
**characterized in that** the mass information (M) is derived from a suspension system of the respective vehicle.

4. Method according to claim 1 or 3,
**characterized in that** the mass information (M) is made available by a control device (14) of an electronically controlled air suspension system of the respective vehicle.

5. Vehicle movement dynamics control device for carrying out the method according to one of the preceding claims, having a control unit (9) acting on the drive and/or the brakes of the tractor-trailer combination (1) and having means for determining a tilting inclination variable and for determining a tilting limit (16) on the basis of the tilting inclination variable, wherein the vehicle movement dynamics control device (23) comprises a plurality of determining means (17) which are assigned to individual vehicles of the tractor-trailer combination (1) and have the purpose of determining respective tilting inclination variables of the respective vehicle and obtaining the decisive value (26) of the tilting inclination variable for determining the tilting limit (16) from the centers of gravity (H) of the vehicles, and determining means (24) for determining the tilting limit (16) from the decisive value (26) of the tilting inclination variable, **characterized in that** the determining means (17) are embodied in such a way that mass information (M) and vehicle information (19) which is determined in advance are predefined as input variables to each determining means (17) for determining the respective centre of gravity H of a vehicle, and wherein the determining means (24) are embodied in such a way that the highest centre of gravity (H) of the individual vehicles is used to determine the tilting limit (16) of the vehicle movement dynamics control device (23), wherein the vehicle movement dynamics control system, for the determination of the mass information (M₃), comprises a subtraction element (26) which receives the mass information M_{Ges} relating to the tractor-trailer combination as the minuend and the mass information M of the tractor (2) as the subtrahend.

6. Vehicle movement dynamics control device according to claim 5,
**characterized in that** the determining means (17) are designed to determine respective tilting inclination variables for determining a center of gravity (H) of the respective vehicle.

7. Vehicle movement dynamics control device according to claim 6,
**characterized in that** the determining means (17) for determining respective centers of gravity (H) of the vehicles are connected in a signal-transmitting fashion to a control device (14) of an electronically controlled air suspension system of the respective vehicle.

8. Vehicle movement dynamics control device according to claim 6 or 7,
**characterized in that** the vehicle movement dynamics control device (23) is connected to the control devices (14) of the electronically controlled air suspension systems of individual vehicles via a serial bus system (10) .

## Revendications

1. Procédé de stabilisation du comportement de roulage d'un attelage (1) comportant plusieurs véhicules, à savoir un véhicule tracteur (2) et au moins un véhicule remorque (3),
dans lequel une grandeur d'inclinaison de basculement est déterminée et une limite de basculement (16) est définie sur la base de la grandeur d'inclinaison de basculement et est prédéterminée sur la base d'un réglage de la dynamique de roulage agissant sur l'entraînement et/ou les freins de l'attelage (1), dans lequel la grandeur d'inclinaison de basculement respective est définie sur plusieurs véhicules de l'attelage (1) et la valeur (18) de la grandeur d'inclinaison de basculement est sélectionnée à partir des grandeurs d'inclinaison de basculement pour la définition de la limite de basculement (16), **caractérisé en ce qu'**un centre de gravité de véhicule (H) du véhicule respectif est déterminé comme étant la grandeur d'inclinaison de basculement, dans lequel le centre de gravité de véhicule (H) le plus élevé des véhicules individuels est utilisé pour la définition de la limite d'inclinaison (16) du réglage de dynamique de roulage, dans lequel le centre de gravité de véhicule (H) respectif est déterminé sur la base d'une information de masse (M) détectée sur le véhicule concerné, en tenant compte d'une information de véhicule spécifique (19) prédéfinie, dans lequel l'information de masse (M₃) concernant un véhicule individuel (3) de l'attelage (1) est déterminée en soustrayant une information de masse (M) d'un autre véhicule de l'attelage (1) à une information de masse (M_{Ges}) concernant l'attelage (1), laquelle information de masse est estimée en tenant compte de grandeurs de fonctionnement actuelles (L) du véhicule tracteur (2).

2. Procédé selon la revendication 1,
**caractérisé en ce que** la grandeur d'inclinaison de basculement du véhicule de l'attelage (1) qui a la plus grande tendance au basculement est sélectionnée en tant que grandeur déterminante (18) pour la définition de la limite de basculement (16).

3. Procédé selon la revendication 1,
**caractérisé en ce que** l'information de masse (M) est déduite à partir d'un système de suspension du véhicule concerné.

4. Procédé selon la revendication 1 ou 3,
**caractérisé en ce que** l'information de masse (M) est fournie par un appareil de commande (14) d'un système de suspension pneumatique à commande électronique du véhicule concerné.

5. Dispositif de commande de dynamique de roulage pour la mise en œuvre du procédé selon l'une des revendications précédentes, comprenant une unité de commande (9) qui agit sur l'entraînement et/ou les freins de l'attelage (1) et des moyens pour définir une grandeur d'inclinaison de basculement et pour définir une limite de basculement (16) sur la base de la grandeur d'inclinaison de basculement, dans lequel le dispositif de commande de dynamique de roulage (23) comprend plusieurs moyens de définition (17) associés à des véhicules individuels de l'attelage (1), qui sont destinés à définir des grandeurs d'inclinaison de basculement respectives du véhicule concerné, et à déterminer la valeur déterminante (26) de la grandeur d'inclinaison de basculement pour la définition de la limite de basculement (16) à partir des centres de gravité de véhicule (H), ainsi que des moyens de définition (24) qui sont destinés définir la limite de basculement (16) à partir de la grandeur déterminante (26) de la pente de basculement,
**caractérisé en ce que** les moyens de définition (17) sont conçus de manière à ce qu'une information de masse (M) et une information de véhicule (19) déterminée préalablement soient prédéterminées en tant que grandeur d'entrée pour chaque moyen de définition (17) afin de définir les centres de gravité de véhicule H respectifs, dans lequel les moyens de définition (24) sont conçus de manière à ce que le centre de gravité de véhicule (H) le plus haut des véhicules individuels soit utilisé pour la définition de la limite de basculement (16) du réglage de dynamique de roulage, dans lequel, pour déterminer l'information de masse (M₃), le dispositif de commande de dynamique de véhicule (23) comprend un élément de soustraction (26) qui reçoit, en tant que valeur soumise à la soustraction, l'information de masse M_{Ges} concernant l'attelage et, en tant que valeur de soustraction, l'information de masse M du véhicule tracteur (2).

6. Dispositif de commande de dynamique de roulage selon la revendication 5,
**caractérisé en ce que** les moyens de définition (17) sont conçus pour définir des grandeurs d'inclinaison de basculement respectives pour la définition d'un centre de gravité de véhicule (H) du véhicule respectif.

7. Dispositif de commande de dynamique de roulage selon la revendication 6,
**caractérisé en ce que**, pour la définition des centres de gravité de véhicule (H) respectifs, les moyens de définition (17) sont reliés par transmission de signaux à un appareil de commande (14) d'un système de suspension pneumatique à commande électronique du véhicule concerné.

8. Dispositif de commande de dynamique de roulage selon la revendication 6 ou 7,
**caractérisé en ce que** le dispositif de commande de dynamique de roulage (23) est relié aux appareils de commande (14) des systèmes de suspension pneumatiques à commande électronique des véhicules individuels par l'intermédiaire d'un système de bus série (10).
